# EUROPÄISCHE PATENTSCHRIFT

(11) **EP 0 613 295 B1**
(45) Veröffentlichungstag und Bekanntmachung des Hinweises auf die Patenterteilung: **13.05.1998**
(21) Anmeldenummer: 94102386.3
(22) Anmeldetag: 17.02.1994
(51) Int. Cl.: H04N 5/21

(54) **Anordnung zur Erzeugung eines Rauschdetektorsignals**
Device for generating a noise detection signal
Dispositif générateur d'un signal de détection de bruit

(30) Priorität: 26.02.1993 DE 4305961
(43) Veröffentlichungstag der Anmeldung: 31.08.1994
(73) Patentinhaber: NOKIA TECHNOLOGY GmbH, 75175 Pforzheim (DE)
(72) Erfinder: Reime, Gerd, D-75328 Schömberg 4 (DE)

(56) Entgegenhaltungen:
- EP-A- 0 059 379
- EP-A- 0 172 590

## Beschreibung

Die Erfindung betrifft eine Anordnung zur Erzeugung eines Rauschdetektorsignals gemäß dem Oberbegriff des Anspruches 1.

In einer Übertragungsanordnung zur Übertragung eines Nutzsignales, beispielsweise zur Übertragung von Audiosignalen zur Darstellung eines Hörereignisses, von Rundfunk- oder Fernsehsignalen oder Daten- und anderen Signalen, sind im allgemeinen zusätzlich Rauschsignale enthalten, die den Nutzsignalen überlagert sind und bei der Auswertung und Wiedergabe der Information der Nutzsignale die Auswertung und Wiedergabe dieser Informationen stören oder gar verfälschen oder die wiedergegebenen Information zusätzlich mit störenden Informationsanteilen behaften. Deshalb werden an geeigneten Stellen in Übertragungskanälen Rauschverminderungsanordnungen eingefügt, die wenigstens einen Teil des übertragenen Rauschspektrums kompensieren.

Bei einer von der Seite 60 des Heftes 25 und der Seite 49 des Heftes 26 der DE-Zeitschrift Funkschau 1984 bekannten, nach dem DNL-Verfahren arbeitenden Rauschverminderungsschaltung zur Reduzierung des Rauschens einer Tonübertragung wird das audiofrequente Nutzsignal über einen ersten Übertragungsweg, nämlich über einen Allpass mit einem konstanten Frequenzgang übertragen, derart, daß im Frequenzbereich oberhalb der oberen Grenzfrequenz des Allpasses das Audiosignal um 180° phasengedreht ist. Ein zweiter, zum ersten Übertragungsweg paralleler Übertragungsweg enthält einen Hochpass und einen von der Amplitude des Nutzsignales im zweiten Übertragungsweg gesteuerten Abschwächer, dessen Ausgangssignal in einem Summierglied dem Signal des ersten Übertragungsweges hinzuaddiert wird. Durch den Hochpass werden im zweiten Übertragungsweg nur die gegen das Rauschen empfindlicheren hohen Frequenzen des Nutzsignales übertragen, und zwar wegen des amplitudengesteuerten Abschwächers nur bei kleinen Amplituden des Nutzsignales im Bereich der höheren Frequenzen des Nutzsignales. Infolge der Phasendrehung der höheren Frequenzen im ersten Übertragungsweg wird bei der Summation der Signale des ersten und des zweiten Übertragungsweges der Bereich der höheren Frequenzen des Nutzsignales bei kleinen Amplituden in diesem Bereich in der Amplitude gemindert oder ausgelöscht und damit die störenden Rauschsignale vermindert. Allerdings wird in diesem Fall auch das Nutzsignal in diesem Frequenzbereich in der gleichen Weise vermindert.

Unbefriedigend ist bei dieser bekannten Anwendung, daß die Steuerung oder Regelung der Rauschverminderung nicht unmittelbar über den Rauschpegel des Rauschsignales erfolgt, sondern durch die Amplitude des Nutzsignales aufgrund der Erkenntnis, daß das Rauschen vor allem bei kleinem Nutzsignal im Bereich hoher Frequenzen des Nutzsignales störend wirkt.

Die Rauschverminderung in der bekannten Rauschverminderungsschaltung erfolgt dadurch, daß in der Rauschverminderungsschaltung Signalparameter des übertragenen Nutzsignales verändert werden. Im ersten Übertragungsweg der Rauschverminderungsschaltung wird die Phase eines bestimmten Frequenzbereiches des Übertragungssignales invertiert. Im zweiten Übertragungsweg der Rauschverminderungsschaltung wird das dort übertragene Signal auf einen bestimmten Frequenzbereich beschränkt. Außerdem werden dort die Amplituden der Schwingungen des frequenzbegrenzten Signales abhängig von dem Pegel des Nutzsignales abgeschwächt. Durch diese Begrenzungs-, Verstärkungs- oder Abschwächungseinstellung in der Rauschverminderungsschaltung werden bestimmte, teilweise vom Pegel des Nutzsignales abhängige Werte der Parameter des ausgangsseitigen Übertragungssignales der Rauschverminderungsschaltung eingestellt, die ein rauschvermindertes Audiosignal ergeben sollen.

Eine andere Schaltung zur Rauschverminderung wird beispielsweise im Wiedergabebereich eines Videorecorders verwendet. Dort sind an den ausgangsseitigen Übertragungskanal für das Luminanzsignal zwei Signalkanäle mit je einem Hochpassfilter angeschlossen, das den Frequenzbereich des Rauschspektrums festlegt und gegenüber schnellen Sprüngen und steilen Flanken des zu übertragenden Videosignals eine differenzierende Wirkung auf die Teile des Nutzsignales ausübt, die das Hochpassfilter durchläßt. Der eine Signalkanal enthält zusätzlich einen Begrenzungsverstärker, der das ausgefilterte Rauschsignal hoch, aber nicht bis in die Begrenzung verstärkt und die durch das Filter übertragenen differenzierten Luminanzsignalanteile derart begrenzt, daß die Amplitude dieser Anteile etwa gleich den Amplituden der nicht verstärkten differenzierten Luminanzanteile des anderen Signalkanals sind. Durch eine Subtraktion der Ausgangssignale der beiden Signalkanäle werden so die differenzierten Luminanzsignalanteile im wesentlichen ausgelöscht. Das verbleibende Signal wird danach derart abgeschwächt, daß der Pegel dieses Signales etwa dem Pegel des Rauschsignales im Luminanzsignal entspricht. Beide Signale werden auf einen Signalsubtrahierer gegeben, so daß das dem Luminanzsignal überlagerte Rauschsignal vermindert oder ausgelöscht wird. Auch hier wird die Begrenzung und/oder die Abschwächung zur Optimierung der Rauschverminderung nicht durch den Pegel des Rauschsignales gesteuert oder geregelt.

Aus der Druckschrift EP 0 059 379 ist ein Fernsehempfänger bekannt, bei dem der Pegel eines Rauschsignals, das einem FBAS-Signal überlagert ist, gemessen wird. Das Messen erfolgt ausschließlich während der Dauer der Horizontalsynchronimpulse. Dazu filtert und differenziert ein Rauschsignalfilter das FBAS-Signal. Die am Ausgang dieses Filters liegenden Signalbestandteile des FBAS-Signals und das Rauschsignals passieren einen Verstärker mit einer von den Horizontalsynchronimpulsen gesteuerten Torschaltung. Die zeitliche Lage der Horizontalsynchronimpulse wird geringfügig verzögert. Auf diese Weise passieren den Verstärker nur das Rauschsignal, das dem Dach des Synchronimpulses überlagert war aber beim Differenzieren von der Impulsspannung getrennt wurde, und die Impulsspitze, die beim Integrieren der abfallenden Pulsflanke entsteht. Eine Einweggleichrichterschaltung unterdrückt die Impulsspitze der abfallenden Pulsflanke. Die vorliegende Schaltung ermöglicht somit wenigstens während einer kurzen Dauer, im speziellen Fall für etwa 5 µs von insgesamt 64 µs, in einem Nutzsignal ein Rauschsignal zu messen. Von Nachteil ist jedoch, daß diese Meßzeit sehr gering ist, so daß der Meßfehler relativ groß ist.

Der Erfindung liegt deshalb die Aufgabe zugrunde, eine Schaltungsanordnung zur Messung des Pegels eines einem Nutzsignal überlagerten Rausch- oder Störsignales mit erhöhter Genauigkeit und zur Erzeugung eines dem Rauschpegel entsprechenden Ausgangssignales anzugeben. Diese Aufgabe wird nach der Erfindung durch die im kennzeichnenden Teil des Anspruches 1 angegebenen Merkmale einer derartigen Schaltungsanordnung in vorteilhafter Weise gelöst.

Die Erfindung geht im wesentlichen von der Erkenntnis aus, daß bei der Übertragung eines Nutzsignales stets Momente auftreten, in denen sich der Pegel des Nutzsignales nicht oder nur wenig ändert, bei einer Differentiation des Nutzsignales somit an diesen Stellen im wesentlichen nur das Rauschsignal wirksam bleibt und diese Momente so häufig sind, daß eine laufende Erfassung dieser Momente möglich ist. Diese Erkenntnis wird durch die Erfindung in vorteilhafter Weise ausgenutzt.

Eine Gleichrichtung vor der Hüllkurvendemodulation, ein Bestandteil der Erfindung, ist deshalb erforderlich, weil das Bild der Amplituden der Rauschschwingungen und der differenzierten Anteile des Nutzsignales zu beiden Seiten der Bezugslinie des durch das Filter übertragenen Signales unterschiedlich ist und die beiden daraus gewonnenen Hüllkurven sich wegen ihrer Unterschiedlichkeit gegenseitig stören können. Gegenüber einer Einweggleichrichtung ist ein Doppelweggleichrichter wesentlich vorteilhafter, da dadurch die Signallücken, die bei der Einweggleichrichtung des Signales entstehen durch die um die Bezugslinie geklappten, bei der Einweggleichrichtung nicht verwendeten Signalanteile besetzt werden und dadurch die Zeitkonstante für die Demodulation und Erzeugung einer der tatsächlichen Hüllkurve nahekommenden demodulierten Hüllkurve wesentlich geringer sein kann. Dies erhöht die Genauigkeit des Verlaufes der demodulierten Hüllkurve zum tatsächlichen Verlauf der Hüllkurve des zu demodulierenden Signales um ein Mehrfaches, so daß eine derart demodulierte Hüllkurve wesentlich mehr Stellen mit dem tatsächlichen Pegel des Rauschsignales enthält als eine nach einer Einweggleichrichtung demodulierte Hüllkurve.

Eine weitere wesentliche Verbesserung der Genauigkeit des Verlaufes der demodulierten Hüllkurve wird durch einen der Gleichrichtung nachgeschalteten Amplitudenbegrenzer zur Begrenzung ausschließlich der die Amplituden des ausgefilterten Rauschsignales übersteigenden Amplitude der Signalanteile des differenzierten Nutzsignales erreicht. Dadurch werden bei einer Hüllkurvendemodulation, wenn sie mit einer Signalintegration in Beziehung steht, über den Rauschpegel überstehende Anteile des differenzierten Nutzsignals nur unwesentlich verbreitert, so daß ein geringerer Anteil des gefilterten Rauschsignals von den Anteilen des differenzierten Nutzsignales bei der Hüllkurvendemodulation verdeckt werden.

Ein wesentlicher Bestandteil der Erfindung ist die Abtastung der Minimas des durch die Hüllkurvendemodulation gewonnenen Verlaufes der Hüllkurve. In besonderen Ausbildungen der dazu vorgesehenen Minimalpegelspeichervorrichtungen kann die Hüllkurve gespeichert werden und durch Verschieben der Bezugslinie oder durch Impulsabtastvorgänge der Pegel der Minimas der Hüllkurve bestimmt werden. In einer vorteilhaften, besonders einfachen Ausgestaltung einer Minimalpegelspeicherschaltung wird ein Speicherkondensator hoher Speicherzeitkonstante verwendet. Eine Lade- oder Entladestrecke dieses Speicherkondensators wird vom Verlauf eines Eingangssignales dieser Strecke, hier des Hüllkurvensignales so geführt, daß bei einer bestimmten, geringen Differenz der gespeicherten Spannung des Speicherkondensators zum Pegel des Führungssignales am Signaleingang der Minimalpegelspeicherschaltung die Lade- oder Entladestrecke wirksam wird und den Speicherkondensator mit einer Nachführzeitkonstante lädt oder entlädt, die geringer ist als die Zeitkonstante des Hüllkurvendemodulators, wenn der Pegel des Führungssignales um die bestimmte Differenz geringer ist als der Pegel des Speicherkondensators, solange diese Bedingung anhält. Damit ist in dem Speicherkondensator während einer von der Speicherzeitkonstante des Speicherkondensators abhängigen Zeitdauer das bisher kleinste Minimum des Pegelverlaufes der demodulierten Hüllkurve gespeichert.

Es hat sich jedoch gezeigt, daß diese o. g. Pegeldifferenz zwischen dem gespeicherten Pegelwert und dem Pegelwert des die Minimalpegelspeicherschaltung steuernden Eingangssignales einer durch Temperatur- und andere Umwelt- und Bauelementeeinflüsse hervorgerufenen Drift unterzogen ist, die bis in den Bereich des Pegels des die Minimalpegelspeicherschaltung steuernden Hüllkurvensignales reichen kann. Deshalb ist es vorteilhaft, daß dem Hüllkurvendemodulator zugeführte Signal außerdem, gegebenenfalls über eine dem Hüllkurvendemodulator entsprechende Schaltung, die eine gegenüber der Zeitkonstante des Hüllkurvendemodulators um Größenordnungen geringere Zeitkonstante aufweist, einer zweiten Minimalpegelspeicherschaltung zuzuleiten, deren Speicherzeitkonstante wesentlich kleiner ist als eine Periodenzeit der Drift. Der daraus von der zweiten Minimalpegelspeicherschaltung erzeugte und übertragene Pegelwert wird über einen Signalsubtrahierer negativ dem von der ersten Minimalpegelspeicherschaltung übertragenen Pegelwert zugesetzt, so daß der von der ersten Minimalpegelspeicherschaltung übertragene Pegelwert von der Drift und vom Differenzwert zwischen dem Steuer- und dem Speicherpegel befreit wird und das Ausgangssignal des Signalsubtrahierers dem tatsächlichen Pegelwert des dem Nutzsignal überlagerten Rauschsignales proportional ist.

Die übrigen Unteransprüche kennzeichnen weitere vorteilhafte Ausgestaltungen der Erfindung.

In einer vorteilhaften Weiterbildung der Erfindung wird es nun möglich, in einer Übertragungsanordnung mit einem Übertragungskanal zur Übertragung eines wenigstens einen Signalparameter aufweisenden Übertragungssignales und mit einer in den Übertragungskanal geschalteten Parameterstellanordnung zu einer bestimmten Einstellung wenigstens eines Signalparameters des Übertragungssignales mittels eines Stellsignales an einem Stelleingang der Parameterstellanordnung und unter Verwendung einer an den Übertragungskanal angeschlossenen erfindungsgemäßen Anordnung zur Erzeugung eines Rauschdetektorsignales, das dem Rauschpegel des dem Nutzsignal überlagerten Rauschsignales entspricht, die Signalparameter des mit der Übertragungsanordnung übertragenen Signales unmittelbar über den Wert des Rauschpegels des störenden Rauschsignales so zu optimieren, daß die Wiedergabe der Nutzinformation des Übertragungssignales geringstmöglich von den übertragenen Rauschsignalen gestört oder verfälscht wird, wenn der Signalausgang der Anordnung zur Erzeugung eines Rauschdetektorsignales mit dem Stelleingang der Parameterstellanordnung verbunden ist und die Auswahl der einzustellenden Signalparameter und der eingestellte Wert der Signalparameter eine bestimmte Funktion P = f (pg) des Wertes des Rauschdetektorsignals ist. Als in den Übertragungskanal geschaltete Parameterstellanordnungen kommen beispielsweise Filternetzwerke, Phasenschalter, Verstärker, Abschwächer oder andere einstellbare Einrichtungen zur Beeinflussung eines oder mehrerer Signalparameter eines von diesen Einrichtungen übertragenen Signales in Frage. Unter dem Begriff Signalparameter werden Größen des Übertragungssignales wie Bandbreite der Frequenz seiner Schwingungen, Amplitude seiner Schwingungen, frequenzabhängiges Amplitudenverhältnis seiner Schwingungen, die Phasenlage seiner Schwingungen zu einer Bezugsschwingung, Frequenzspektren und vieles andere mehr verstanden.

Die Erfindung wird nachfolgend anhand vorteilhafter Ausführungsbeispiele näher erläutert. In den zugehörigen Zeichnungen zeigen
- Figur 1: ein Blockschaltbild einer Anordnung zur Erzeugung eines dem Rauschpegel entsprechenden Rauschdetektorsignales,
- Figur 2: ein Schaltungsbeispiel einer Anordnung zur Erzeugung eines dem Rauschpegel entsprechenden Rauschdetektorsignales und
- Figur 3: Diagramme a) bis g) zur schematischen Darstellung der Signale im Übertragungsweg einer in den Figuren 1 und 2 dargestellten Schaltungsanordnung.

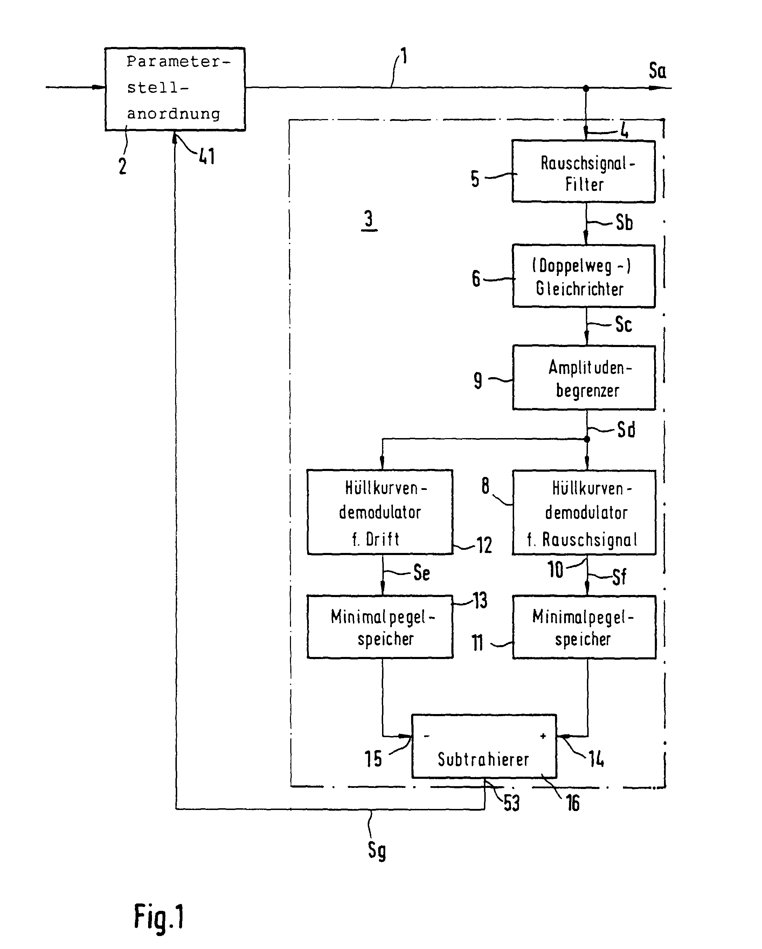

In Figur 1 ist in einem Blockschaltbild ein Übertragungskanal 1 in der Gestalt einer waagerechten Linie zur Übertragung eines Nutzsignales Sn, beispielsweise eines Videosignales dargestellt. In diesen Übertragungskanal 1 ist eine Anordnung 2 zur Einstellung bestimmter Signalparameter der mit der Anordnung 2 übertragenen Signale Sa eingefügt. Im dargestellten Ausführungsbeispiel ist diese Anordnung 2 eine Anordnung zur Verminderung des dem Nutzsignal Sn überlagerten Rauschsignales Sr, die von einer Anordnung zur Erzeugung eines Rauschdetektorsignales, im folgenden mit Rauschpegeldetektor 3 bezeichnet, gesteuert oder geregelt wird. Dieser Rauschpegeldetektor 3 ist mit dem Signaleingang 4 eines Rauschsignalfilters 5 an den Übertragungskanal 1 angeschlossen. Das Rauschsignalfilter 5 des Rauschpegeldetektors 3 bestimmt den Frequenzbereich des dem Nutzsignal Sn überlagerten Rauschsignales Sr, der von dem Rauschpegeldetektor 3 erfaßt werden soll.

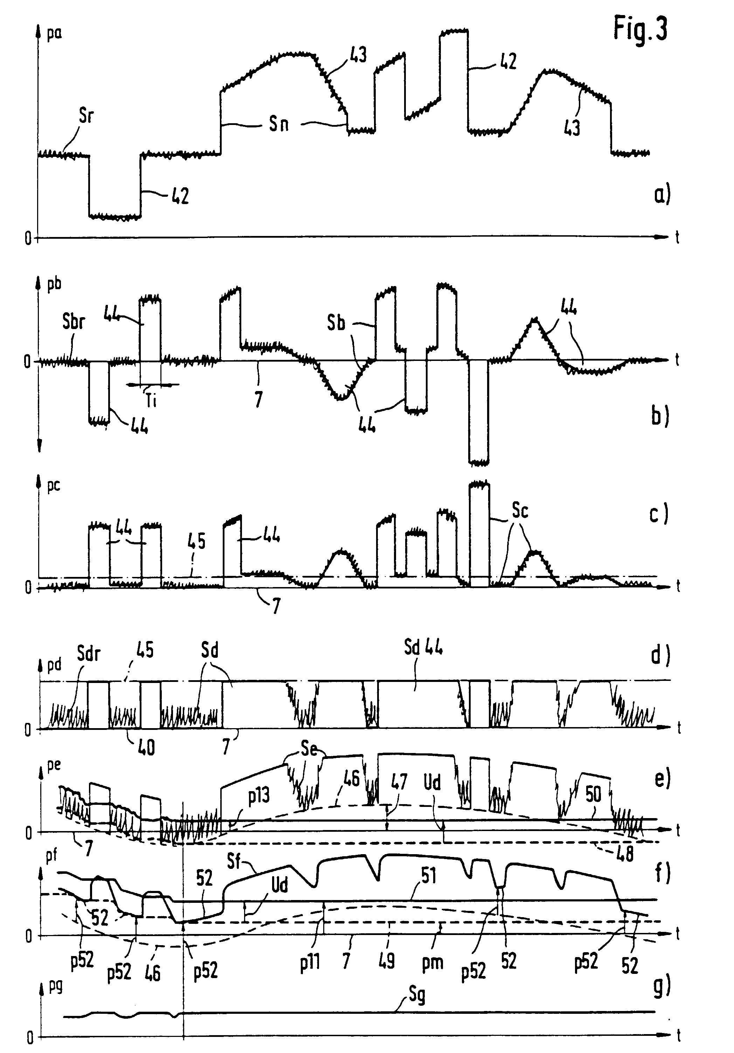

Gleichzeitig hat das Rauschsignalfilter 5 die Aufgabe, durch einen Hochpaßcharakter das Rauschsignal vom Nutzsignal zu trennen. Die vom Rauschsignalfilter 5 durchgelassenen Signalbestandteile des Nutz- und des Rauschsignales werden in einem nachgeschalteten Gleichrichter 6 derart gleichgerichtet, daß nur noch auf der einen Seite einer Bezugslinie 7 (Diagramm b) und c) der Figur 3) Signale auftreten. Diese Maßnahme ist eine Voraussetzung für die Erzeugung einer den Pegel pr der Rauschsignale Sr erfassenden Hüllkurve in einem Hüllkurvendemodulator 8 des Rauschpegeldetektors 3. Zur Verbesserung der Genauigkeit des Verlaufes der Hüllkurve, die vom Hüllkurvendemodulator 8 erzeugt wird, ist dem Hüllkurvendemodulator ein Amplitudenbegrenzer 9 vorgeschaltet, der die von dem Nutzsignal herrührenden Signalanteile 44 vom Signalausgang des Gleichrichters 6 soweit begrenzt, daß sie nicht wesentlich die Amplituden 40 des Rauschsignales überragen.

Das Hüllkurvensignal Sf des Signalausganges 10 des Hüllkurvendemodulators 9 steuert einen Minimalpegelspeicher 11 derart, daß in einem Speicherelement großer Speicherzeitkonstante Tsp des Minimalpegelspeichers jeweils der Pegelwert des bisher geringsten Pegelminimums des steuernden Hüllkurvensignales Sf gespeichert wird. Ein gleichartiger zweiter Schaltungszweig aus einem Hüllkurvendemodulator 12 und einem Minimalpegelspeicher 13 ist dem ersten Schaltungszweig (Schaltungsblöcke 8 und 11) parallelgeschaltet. Er weist zum ersten Schaltungszweig den Unterschied auf, daß der Hüllkurvendemodulator 12 dieses zweiten Zweiges keine eine Hüllkurve erzeugenden, signalintegrierenden Mittel enthält, sondern lediglich als Trennverstärker wirkt. Der Sinn des Zweiges mit den Anordnungen 12 und 13 ist der, eine Drift der Grundlinie 7 in der Übertragung des Rauschsignales im Rauschpegeldetektor 3 bis zur Speicherung im Minimalpegelspeicher 11 zu erkennen und zu kompensieren. Eine derartige Drift kann durch Temperatur- und andere Einflüsse der Bauelemente und der Umwelt auf die Bauelemente auftreten und kann leicht die Größenordnung des Pegels der übertragenen Rauschsignale erreichen. Zur Kompensation dieser Drift sind die Signalausgänge der beiden Minimalpegelspeicher 11 und 13 je an einen der Signaleingänge 14 und 15 eines Signalsubtrahierers 16 angeschlossen, dessen Ausgangssignal das dem Rauschpegel des vom Rauschsignalfilter 5 begrenzten Rauschanteiles des Nutzsignales entsprechende oder proportionale Rauschdetektorsignal Sg ist. Dieses Rauschdetektorsignal wird im dargestellten Ausführungsbeispiel einem Stelleingang 41 der Rauschsignalminderungsanordnung 2 zur Einstellung bestimmter Werte bestimmter Signalparameter des von der Anordnung 2 übertragenen Signals Sa für eine optimale Rauschverminderung im Übertragungskanal 1 zugeführt.

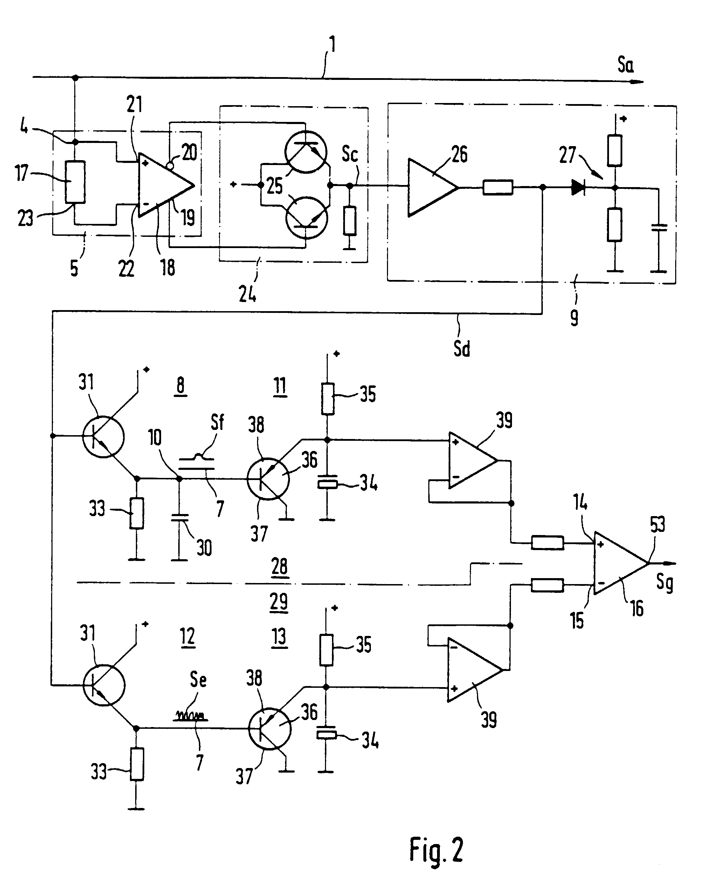

Figur 2 zeigt in einer vereinfachten Darstellung eine vorteilhafte Ausgestaltung des in Figur 1 in einem Blockschaltbild dargestellten Rauschpegeldetektors 3. Das an die Übertragungsleitung 1 angeschlossene Rauschsignalfilter 5 besteht im dargestellten Ausführungsbeispiel im wesentlichen aus einem Verzögerungsglied 17 und einem Differenzverstärker 18 mit einem nicht invertierenden Signalausgang 19 und einem invertierenden Signalausgang 20. Der eine Signaleingang des Differenzverstärkers 18, der als Subtrahierer wirkt, ist an den Eingang des Verzögerungsgliedes 17, der andere Signaleingang 22 des Differenzverstärkers 18 ist an den Signalausgang 23 des Verzögerungsgliedes 17 angeschlossen. Die Verzögerungszeit Tvl des Verzögerungsgliedes 17 ist so bemessen, daß sie den gewünschten Frequenzumfang des zu erfassenden Rauschsignales Sr bestimmt und gleich oder kleiner ist als eine bestimmte maximale Impulsbreite Ti eines bei der Differenzierung eines Signalsprunges 42 des Nutzsignales Sn erzeugten Differenzierungsimpulses 44. Die beiden Signalausgänge 19 und 20 des Differenzverstärkers 18 führen an die beiden Eingänge eines Doppelweggleichrichters 24, der im dargestellten Ausführungsbeispiel aus zwei gegeneinander geschalteten Transistoren 25 in einer symetrischen Anordnung besteht. Der dem Doppelweggleichrichter 24 nachgeschaltete Amplitudenbegrenzer 9 besteht im dargestellten Ausführungsbeispiel aus einem Verstärker 26 und einer gesonderten Begrenzerschaltung 27, deren Begrenzung leicht optimal an die Anforderungen der folgenden Schaltungsanordnung angepaßt werden kann. Die dem Amplitudenbegrenzer nachfolgende Schaltungsanordnung besteht aus zwei in ihrer Schaltungsausgestaltung im wesentlichen identischen, parallel angeordneten Schaltungszweigen 28 und 29, die sich lediglich dadurch unterscheiden, daß nur der Hüllkurvendemodulator 8 des ersten Schaltungszweiges 28 einen die Hüllkurve erzeugenden Integrationskondensator 30 enthält. Der Hüllkurvendemodulator 8 des ersten Schaltungszweiges besteht im dargestellten Ausführungsbeispiel aus einem Trennverstärker 31 und einer nachfolgenden, aus einem Entladewiderstand 33 und dem Integrationskondensator 30 bestehenden Integrationsschaltung, deren Zeitkonstante Tzf größer ist als die Periodendauer der kleinsten mit dem Rauschpegeldetektor 3 erfaßten Rauschsignalfrequenz. Der dem Hüllkurvendemodulator 8 nachgeschaltete Minimalpegelspeicher 11 besteht im dargestellten Ausführungsbeispiel aus einem Ladekondensator 34, der über einen Ladewiderstand 35 mit einer hohen Speicherzeitkonstante Tsp aufgeladen wird, und einer Entladestrecke in der Gestalt der Kollektor-Emitter-Strecker 36 eines Transistors 37, dessen Steuerstrecke 38, im dargestellten Ausführungsbeispiel die Basis-Emitter-Strecke, zwischen dem Signalausgang 10 des Hüllkurvendetektors 8 und dem den Pegelwert speichernden Ende des Speicherkondensators 34 liegt. Der zweite Schaltungszweig 29 ist in der Schaltungsausstattung mit dem ersten Schaltungszweig 28 identisch, mit Ausnahme des in den zweiten Schaltungszweig 29 fehlenden Integrationskondensators am Ausgang des Trennverstärkers 31 des Hüllkurvendemodulators 12. Beide Schaltungszweige 28 und 29 sind ausgangsseitig über je einen Trennverstärker 39 je an einen Signaleingang 14 bzw. 15 eines Signalsubtrahierers 16 in der Gestalt eines Differenzverstärkers angeschlossen.

Anhand der Diagramme a) bis g) der Figur 3 wird nachfolgend die Signalverarbeitung im Rauschpegeldetektor 3 näher erläutert. Im Diagramm a) ist als Beispiel eines auf dem Übertragungskanal 1 übertragenen Nutzsignales Sn ein Videosignal einer Videozeile schematisch dargestellt. Den Verlauf dieses Videosignales Sn ist ein Rauschsignal Sr überlagert. Dieses im Diagramm a) dargestellte Signalgemisch Sa liegt am Signaleingang 4 des Rauschsignalfilters 5. Das Rauschsignalfilter erzeugt durch seinen Hochpasscharakter an seinem Signalausgang, bespielsweise dem nicht invertierenden Signalausgang 19 eines Differenzverstärkers 18, ein im Diagramm b) dargestelltes Ausgangssignal Sb. In Folge des Hochpaßcharakters des Rauschsignalfilters 5 im Frequenzbereich der Rauschsignale schwingt das Ausgangssignal Sb des Rauschfilters in Zeitbereichen, in denen das Nutzsignal Sn seinen Pegelverlauf nicht ändert, unmittelbar um eine Bezugslinie 7. Anstelle von Signalsprüngen 42 oder von Signalflanken 43 hoher Steilheit entstehen im gefilterten Ausgangssignal Sb des Rauschsignalfilters Signalanteile 44, die Differentiationsanteilen des Nutzsignales Sn entsprechen und die im gefilterten Ausgangssignal des Rauschsignalfilters 5 wesentliche Teile des um die Bezugslinie schwingenden Rauschsignales überdecken können. Deshalb wird das Rauschsignalfilter so ausgestaltet, daß die zeitliche Ausdehnung der durch das Differentiationsverhalten des Rauschsignalfilters 5 gebildeten Signalanteile 44 des Nutzsignales möglichst klein ist. Um für die spätere Hüllkurvenbildung störende Bereiche einer Informationslücke zu vermeiden und für die Hüllkurve eine Bezugslinie 7 zu erhalten, werden in einer Doppelweggleichrichtung sämtliche Signale nach einer Seite der Bezugslinie 7 angeordnet, so daß ein im Diagramm c) dargestellter Signalverlauf Sc entsteht. Im nachfolgenden Amplitudenbegrenzer 9 wird das gleichgerichtete Signal Sc derart verstärkt und begrenzt, daß das unmittelbar auf der Bezugslinie 7 angesiedelte Rauschsignal stets mit Sicherheit nicht begrenzt wird, während die überstehenden Signalanteile 44 des Nutzsignals an einer eingestellten Begrenzungslinie 45 derart begrenzt werden, daß sie nur wenig über den größten zu erwartenden Pegel des über der Bezuglinie 7 liegenden Rauschsignales überstehen, wie im Diagramm d) für das Ausgangssignal Sd des Amplitudenbegrenzers 9 schematisch dargestellt ist. Durch Temperatureinflüsse und andere Umwelteinflüsse auf die Bauelemente des Rauschpegeldetektors 3 und durch Störeinflüsse kann das den Hüllkurvendemodulatoren 8 und 12 zugeführte Signal Sd einer Drift der Bezugslinie 7 überlagert sein. Dadurch weicht die in den Diagrammen e) und f) gestrichelt dargestellte Signalbezugslinie 46 von der Systembezugslinie 7 mit einer Auslenkung 47 ab, die in der Größenordnung des Pegels des Rauschsignales liegen kann. Im Diagramm e) ist das mit einer Drift 46 behaftete Ausgangssignal Se des Amplitudenbegrenzers 9 als Ausgangssignal des dem Hüllkurvendemodulator 8 entsprechenden Trennverstärkers 31 dargestellt, während im Diagramm f) das dem gleichen Driftsignal 46 überlagerte Hüllkurvensignal als Ausgangssignal Sf des Hüllkurvendemodulators 8 dargestellt ist. Diese Drift 46 ist zur besseren Veranschaulichung in beiden Diagrammen extrem komprimiert dargestellt. Außerdem enthalten die beiden Diagramme e) und f) eine strichlierte, dick dargestellte Linie 48 bzw. 49, die in beiden Fällen den jeweils bisher erreichten tiefsten Wert des Verlaufes des jeweils den Steuereingang des Minimalpegelspeichers 11 bzw. 13 steuernden Signales Se bzw. Sf darstellt. Außerdem enthalten die beiden Diagramme e) und f) eine durchgezogene dicke Linie 50 bzw. 51, die durch eine Verschiebung senkrecht zur Zeitachse t der Linien 48 und 49 für den jeweils letzten Minimalwert des Signalverlaufes Se bzw. Sf um die Differenzspannung Ud der Steuerstrecke 38 des Nachlaufsteuerelementes 37 des Minimalpegelspeichers im Schaltzustand der kleinen Nachlaufzeitkonstante Tnl des Minimalpegelspeichers entstanden ist und die den gespeicherten Pegelwert p11 und p13 der beiden Minimalpegelspeicher 11 und 13 darstellt. Das im Hüllkurvendemodulator 8 aus dem Ausgangssignal Sd des Amplitudenbegrenzers 9 gebildete Hüllkurvensignal Sf enthält in seinem Verlauf an den von den Differentiationsanteilen 44 des Nutzsignales nicht gestörten Stellen 52 unmittelbar einen dem Rauschpegel pr des dem Nutzsignal überlagerten Rauschsignales proportionalen Signalpegel p52. Die Speicherzeitkonstante Tsp der Minimalpegelspeicher ist so eingestellt, daß sich der Speicherzustand des Speicherkondensators während zweier benachbarter, jedoch extrem weit auseinanderliegender ungestörter Stellen 52 des Hüllkurvensignales Sf nicht merkbar verändert. Mit dem Minimalpegelspeicher 12 im zweiten Schaltungszweig 29 wird nicht der Pegel der Hüllkurve des Ausgangssignales Sd des Amplitudenbegrenzers 9 abgetastet, sondern der Minimalwert des Verlaufes des Ausgangssignales Sd des Amplitudenbegrenzers 9 überhaupt, um damit die der Drift unterworfene Signalbezugslinie 46 zu erfassen und als einen der Drift entsprechenden Pegelwert p13 zu speichern. Dieser als Ausgangssignal 50 am Ausgang des Minimalpegelspeichers 13 des zweiten Schaltungszweiges 29 anliegende Pegelwert p13 wird im nachfolgenden Signalsubtrahierer 16 von dem im Minimalpegelspeicher 11 des ersten Schaltungszweiges 28 gespeicherten und durch das Ausgangssignal 51 des Minimalpegelspeichers 11 dargestellten Pegelwert p11 des bisher tiefsten Punktes des Verlaufes der Hüllkurve Sf des der Drift 46 überlagerten Ausgangssignales Sd des Amplitudenbegrenzers 9 subtrahiert, so daß am Signalausgang 53 des Signalsubtrahierers 16 ein Rauschdetektorsignal Sg erzeugt wird, das von der Drift 46 und der Differenzspannung Ud der Steuerstrecke 38 der Minimalpegelspeicher befreit ist und das mit verhältnismäßig großer Genauigkeit dem Pegel des dem Nutzsignal überlagerten Rauschsignales entspricht.

## Patentansprüche

1. Anordnung (3) zur Messung des Pegels (pr) eines Rauschsignals (Sr), das einem Nutzsignal (Sn) insbesondere einem Audio-, Video- oder Datensignal überlagert ist, und zur Erzeugung eines diesem Pegel (pr) entsprechenden Rauschdetektorsignals (Sg), wobei die Anordnung (3) ein Rauschsignalfilter (5) aufweist, welches das Rauschsignal (Sr) durchläßt und das Nutzsignal (Sn) differenziert, **gekennzeichnet durch,**
- einen Gleichrichter (6) zum Gleichrichten der vom Rauschsignalfilter (5) durchgelassenen Signalbestandteile des Nutzsignals (Sn) und des Rauschsignals (Sr)
- einem Hüllkurvendemodulator (8) zur Erzeugung eines Hüllkurvensignals (Sf) aus den gleichgerichteten Signalbestandteilen des Nutzsignals (Sn) und des Rauschsignals (Sr) und
- einem Minimalpegelspeicher (11), den das Hüllkurvensignal (Sf) derart steuert, daß in einem Speicherelement großer Speicherzeitkonstante jeweils der Pegelwert des bisher geringsten Pegels des Hüllkurvensignals (Sf) gespeichert wird.

2. Anordnung nach Anspruch 1,
**dadurch gekennzeichnet,**
daß der Gleichrichter (6) ein Doppelweggleichrichter (24) ist.

3. Anordnung nach Anspruch 1,
**gekennzeichnet**
durch einen dem Gleichrichter (6) nachgeschalteten Amplitudenbegrenzer (9) zur Begrenzung ausschließlich der die Amplituden (40) des ausgefilterten Rauschsignales (Sdr) übersteigenden Amplitude der Signalanteile (Sd44) des differenzierten Nutzsignales.

4. Anordnung nach Anspruch 1, dadurch gekennzeichnet, daß das Rauschsignalfilter (5) eine Signalverzögerungsanordnung (17) enthält, an deren Signaleingang der eine Eingang (21) und an deren Signalausgang der andere Eingang (22) eines Signalsubtrahierers (18) angeschlossen sind.

5. Anordnung nach Anspruch 4,
**dadurch gekennzeichnet,**
- daß der Signalsubtrahierer (18) einen invertierenden Signalausgang (20) und einen nicht invertierenden Signalausgang (19) enthält,
- daß der Gleichrichter (6) ein Doppelweggleichrichter (24) ist
- und daß an den invertierenden und an den nicht invertierenden Signalausgang des Signalsubtrahierers (18) je ein Eingang des Doppelweggleichrichters (24) angeschlossen ist.

6. Anordnung nach Anspruch 1, dadurch gekennzeichnet, daß die Minimalpegelspeicher (11, 13) einen Speicherkondensator (34), der über einen Ladewiderstand (35) mit einer hohen Speicherzeitkonstante (Tsp) aufgeladen wird, und eine steuerbare Entladestrecke (36) enthält, die vom Hüllkurvensignal geführt wird und eine Nachführzeitkonstante aufweist, die geringer ist als die Zeitkonstante (Thk) des Hüllkurvendemodulators (8).

7. Anordnung nach Anspruch 1, gekennzeichnet dadurch, daß in einem weiteren, dem Hüllkurvendemodulator (8) und dem Minimalpegelspeicher (11) entsprechenden Schaltungszweig (28) ein weiterer aus einem Hüllkurvendemodulator (12) und einem Minimalpegelspeicher (13) bestehender Schaltungszweig (29) eingangsseitig an den Signaleingang des Hüllkurvendemodulators (8) und ausgangsseitig an den einen Signaleingang (15) eines weiteren Signalsubtrahierers (16) angeschlossen ist, an dessen anderen Signaleingang (14) der Ausgang des erstgenannten Minimalpegelspeichers (11) angeschlossen ist.

8. Anordnung nach Anspruch 7,
**dadurch gekennzeichnet,**
daß die zwischen dem Signaleingang des Hüllkurvendemodulators (8) und den Signaleingänge (14, 15) des zweiten Signalsubtrahierers (16) gebildeten beiden Schaltungszweige (28, 29) mit Ausnahme der Zeitkonstante (Thk) des Hüllkurvendemodulators identisch ausgebildet sind.

9. Verwendung der Anordnung (3) nach Anspruch 1, zum Steuern und/oder Regeln einer Parameterstellanordnung (2) insbesondere zur Verminderung eines Rauschsignals (Sr),
- mit einem Übertragungskanal (1) zur Übertragung eines wenigstens einen Signalparameter aufweisenden Übertragungssignals (Sa),
- ferner mit einer in den Übertragungskanal geschalteten Parameterstellanordnung (2) zum Einstellen wenigstens eines Signalparameters mittels eines Stellsignals,
**dadurch gekennzeichnet,**
- daß der Signalausgang (53) der Anordnung (3) zur Erzeugung eines Rauschdetektorsignales (Sg) mit dem Stelleingang (41) der Parameterstellanordnung (2) verbunden ist
- und daß die Auswahl der einzustellenden Signalparameter und der eingestellte Wert der Signalparameter vom Rauschdetektorsignal (Sg) abhängen.

## Claims

1. An arrangement (3) for measuring the level (pr) of a noise signal (Sr) which is superimposed upon a useful signal (Sn), in particular an audio-, video- or data signal, and for generating a noise detector signal (Sg) corresponding to this level (pr), wherein the arrangement (3) comprises a noise signal filter (5) which transmits the noise signal (Sr) and differentiates the useful signal (Sn), characterised by
- a rectifier (6) for rectifying the signal components of the noise signal (Sn) and the noise signal (Sr) transmitted by the noise signal filter (5)
- an envelope curve demodulator (8) for generating an envelope curve signal (Sf) from the rectified signal components of the useful signal (Sn) and the noise signal (Sr) and
- a minimal level store (11) which controls the envelope curve signal (Sf) in such manner that the level value of the previously lowest level of the envelope curve signal (Sf) is in each case stored in a storage element with a large storage time constant.

2. An arrangement according to Claim 1, characterised in that the rectifier (6) is a full-wave rectifier (24).

3. An arrangement according to Claim 1, characterised by an amplitude limiter (9), arranged downstream of the rectifier (6), for limiting only that amplitude of the signal components (Sd44) of the differentiated useful signal which exceeds the amplitudes (40) of the filtered-out noise signal (Sdr).

4. An arrangement according to Claim 1, characterised in that the noise signal filter (5) comprises a signal delay arrangement (17) whose signal input is connected to one input (21) of a signal subtracter (18) and whose signal output is connected to the other input (22) of said signal subtracter (18).

5. An arrangement according to Claim 4, characterised in that
- the signal subtracter (18) comprises an inverting signal output (20) and a non-inverting signal output (19)
- the rectifier (6) is a full-wave rectifier (24)
- and that an input of the full-wave rectifier (24) is in each case connected to the inverting signal output and non-inverting signal output of the signal subtracter (18).

6. An arrangement according to Claim 1, characterised in that the minimal level store (11, 13) comprises a storage capacitor (34), which is charged via a charging resistor (35) with a large storage time constant (Tsp), and a controllable discharge path (36) which is controlled by the envelope curve signal and has an adjustment time constant which is smaller than the time constant (Thk) of the envelope curve demodulator (8).

7. An arrangement according to Claim 1, characterised in that in a further circuit branch (28) corresponding to the envelope curve demodulator (8) and the minimal level store (11), a further circuit branch (29) consisting of an envelope curve demodulator (12) and a minimal level store (13) is connected at its input to the signal input of the envelope curve demodulator (8) and at its output to one signal input (15) of a further signal subtracter (16) whose other signal input (14) is connected to the output of the first-mentioned minimal level store (11).

8. An arrangement according to Claim 7, characterised in that the two circuit branches (28, 29) formed between the signal input of the envelope curve demodulator (8) and the signal inputs (14, 15) of the second signal subtracter (16) are of identical construction with the exception of the time constant (Thk) of the envelope curve demodulator.

9. The use of the arrangement (3) according to Claim 1 for controlling and/or regulating a parameter setting arrangement (2), in particular for reducing a noise signal (Sr)
- with a transmission channel (1) for transmitting a transmission signal (Sa) having at least one signal parameter
- and with a parameter setting arrangement (2), connected into the transmission channel, for setting at least one signal parameter by means of a setting signal
characterised in that
- the signal output (53) of the arrangement (3) for generating a noise detector signal (Sg) is connected to the setting input (41) of the parameter setting arrangement (2)
- and that the selection of the signal parameters to be set and the set value of the signal parameters are dependent upon the noise detector signal (Sg).

## Revendications

1. Dispositif (3) destiné à la mesure du niveau (pr) d'un signal de bruit (Sr), qui est superposé à un signal utile (Sn), notamment un signal audio, un signal vidéo ou un signal de données, et servant à produire un signal de détection de bruit (Sg) correspondant à ce niveau (pr), le dispositif (3) comprenant un filtre de signaux de bruit (5), qui laisse passer le signal de bruit (Sr) et qui différentie le signal utile (Sn), caractérisé par
- un redresseur (6) servant à redresser les composantes du signal utile (Sn) et du signal de bruit (Sr), transmises par le filtre de signaux de bruit (5),
- un démodulateur d'enveloppe (8) servant à produire un signal d'enveloppe (Sf) à partir des composantes redressées du signal utile (Sn) et du signal de bruit (Sr), et
- une mémoire de niveaux minimaux (11), commandée par le signal d'enveloppe (Sf) de telle manière que soit mémorisée, dans un élément de mémoire à grande constante de temps de conservation, chaque fois la valeur de niveau du niveau le plus petit jusqu'à présent du signal d'enveloppe (Sf).

2. Dispositif selon la revendication 1,
caractérisé en ce que
le redresseur (6) est un redresseur à deux alternances (24).

3. Dispositif selon la revendication 1,
caractérisé par
un limiteur d'amplitude (9), monté à la suite du redresseur (6) et servant à limiter exclusivement l'amplitude, excédant les amplitudes (40) du signal de bruit (Sdr) résultant du filtrage, des composantes (Sd44) du signal utile différentié.

4. Dispositif selon la revendication 1,
caractérisé en ce que
le filtre de signaux de bruit (5) comporte un dispositif de retardement de signaux (17), à l'entrée de signaux duquel est raccordée une entrée (21) d'un soustracteur de signaux (18), tandis qu'à sa sortie de signaux est reliée l'autre entrée (22) de ce soustracteur.

5. Dispositif selon la revendication 4,
caractérisé en ce que
- le soustracteur de signaux (18) présente une sortie inverseuse de signaux (20) et une sortie non inverseuse de signaux (19),
- en ce que le redresseur (6) est un redresseur à deux alternances (24), et
- en ce qu'une entrée du redresseur à deux alternances (24) est respectivement reliée à la sortie inverseuse de signaux et à la sortie non inverseuse de signaux du soustracteur de signaux (18).

6. Dispositif selon la revendication 1,
caractérisé en ce que
la mémoire de niveaux minimaux (11, 13) comporte un condensateur de mémorisation (34), qui est chargé par l'intermédiaire d'une résistance de charge (35) à constante élevée de temps de conservation (Tsp), et une voie de décharge (36), qui peut être commandée,-qui est pilotée par le signal d'enveloppe et qui présente une constante de temps d'asservissement inférieure à la constante de temps (Thk) du démodulateur d'enveloppe (8).

7. Dispositif selon la revendication 1,
caractérisé en ce que,
dans une autre branche de circuit (28) correspondant au démodulateur d'enveloppe (8) et à la mémoire de niveaux minimaux (11), il est prévu une autre branche de circuit (29) consistant en un démodulateur d'enveloppe (12) et en une mémoire de niveaux minimaux (13), et qui est reliée, du côté entrée, à l'entrée de signaux du démodulateur d'enveloppe (8) et, du côté sortie, à une entrée de signaux (15) d'un autre soustracteur de signaux (16), à l'autre entrée de signaux (14) duquel est reliée la sortie de la première mémoire de niveaux minimaux (11).

8. Dispositif selon la revendication 7,
caractérisé en ce que
les deux branches de circuit (28, 29), formées entre l'entrée de signaux du démodulateur d'enveloppe (8) et les entrées de signaux (14, 15) du deuxième soustracteur de signaux (16) sont réalisées identiques à l'exception de la constante de temps (Thk) du démodulateur d'enveloppe.

9. Utilisation du dispositif (3) selon la revendication 1 pour la commande et/ou la régulation d'un dispositif de réglage de paramètres (2), notamment pour réduire un signal de bruit (Sr), comportant
- un canal de transmission (1) servant à transmettre un signal de transmission (Sa) présentant au moins un paramètre de signal,
- et, en outre, un dispositif de réglage de paramètres (2) monté dans le canal de transmission et servant à régler au moins un paramètre de signal au moyen d'un signal de réglage,
caractérisée en ce que
- la sortie de signaux (53) du dispositif (3), servant à produire un signal de détection de bruit (Sg), est reliée à l'entrée de réglage (41) du dispositif de réglage de paramètres (2),
et
- en ce que le choix des paramètres de signal à régler et la valeur réglée des paramètres de signal dépendent du signal de détection de bruit (Sg).
